# EUROPEAN PATENT SPECIFICATION

(11) **EP 3 408 163 B1**
(45) Date of publication and mention of the grant of the patent: **13.10.2021**
(21) Application number: 17700576.6
(22) Date of filing: 19.01.2017
(51) Int. Cl.: B62D 29/04, F16B 5/02, B60R 13/08, F16B 5/06, F16B 31/04, B62D 35/02, B32B 38/04, B32B 1/00, F16B 1/00

(54) **UNDERBODY PANEL HAVING MOUNTING POINTS**
UNTERBODENVERKLEIDUNG MIT BEFESTIGUNGSPUNKTEN
PANNEAU DE SOUBASSEMENT AYANT DES POINTS DE MONTAGE

(30) Priority: 27.01.2016 EP 16153012
(43) Date of publication of application: 05.12.2018
(73) Proprietor: Autoneum Management AG, 8406 Winterthur (CH)
(72) Inventor: D'AMICO, Roberto, 8408 Winterthur (CH)
(86) International application number: PCT/EP2017/051096
(87) International publication number: WO 2017/129469

(56) References cited:
- EP-A1- 0 346 237
- EP-A1- 2 623 401
- WO-A1-98/04441
- DE-A1- 19 924 604
- DE-A1-102009 005 761
- DE-A1-102014 112 528
- GB-A- 2 299 391
- US-A1- 2013 026 783

## Description

### Technical Field

The present invention is directed to a moulded underbody panel, in particular directed to external situated fibrous panels for a motor vehicle having a mounting area for fixing the panel to the vehicle chassis.

### Background Art

External situated panels, also known as trim parts, may serve for covering the underside of motor vehicles and shielding the car body against water, snow, stone chipping and dirt. Moreover, the use of such panels reduces noise emission from the car to the environment as well as reduces noise passing to the passenger cabin. As these panels form large parts, covering the underbody of a vehicle partly or fully, either as one piece or multiple panels, the need for light weight enduring solutions is given.

These panels may consist of at least a fibrous layer made of felt consolidated or cured to form a stiff porous layer. The panel(s) or shield(s) can for instance be thermally formed in the shape necessary to cover the area, for instance as an under-engine shield or panel, a shield or panel for the main underbody area or a part of it, or a shield or panel under the trunk area. The panel(s) or shield(s) may contain multiple mounting points for fixing the panel to the mounting area underneath the car, mainly on areas of the vehicle body frame.

Whenever the vehicle drives, the underbody panels are subjected to forces pulling on the panels. In particular when the vehicle drives through snow, water or mud or even by the pressure of air at high speeds, the moulded underbody panels may be temporarily heavily loaded in particular in the mounting point of the panel. This can cause damages, a loss of performance or even loss of functionality of a mounting point or the panel as a whole. Physical wading tests for example, which typically involve driving the car through different depths of water at different speeds, are used to assess the ability of the moulded underbody panels and their mountings to resist against being damaged by such a heavy load. The shield or panel situated underneath the vehicle at the front, for instance under engine shields, are the panels which are particularly loaded in wading scenarios. However, also wheel-arch liners, side panels, or other underbody panels may be affected.

One of the weaker points of such moulded underbody panel might be the mounting sockets, at which the moulded underbody panel is fixed to the vehicle's chassis.

An underbody panel normally contains at least one through-hole for each mounting point. Which is either punched through the material after the moulding of the part or the holes are integrated in the moulding tool as material free areas. The mounting is achieved by inserting a rod shape element through the through-hole. The rod shaped element might be permanently fixed to the vehicle car. The part will then be mounted by placing the through-hole over the rod shaped element and fixing it with at least a fixing element which is able to clamp the material of the underbody panel in its place preventing or at least hindering any in plane or out of plane movement of the part. The fixing device can be for instance a screw or clipping device. Alternatively the rod shape element might be combined with the fixing element to form one part, for instance a screw, bolt or punch clip, and the counter element, preferably integrated in the mounting area of the vehicle chassis or body.

Generally for the mounting of these panels following types of fixing might be used: punch or screw clips, or screws in combination with a nut or a clip; however other more elaborate solutions are possible as well. In particular the use of washers are favourable to increase the clamped area and the friction force of the panel preventing the part from moving around and thereby damaging mounting through-holes in the moulded underbody panel.

During the use of the panel on the vehicle, in particular during driving, the forces working on the panel hence on the mounting induces a loosening of the mounting system, either because of slightly thinning of the material of the panel and or loosening of at least one of the fixing or fastening elements. A loosened panel starts sliding against the rod shaped element, thereby rubbing the panel material against the rod shaped element causing a local stress in that area of the material, over prolonged times or at increased loading forces this rubbing will induce a local failure of the material, increasing the through-hole size locally eventually causing a rupture of the through-hole or a pull-through failure of the mounting.

A possibility for achieving a higher breaking force is to increase the number of mounting points, which has the drawback of higher weight, costs and complexity. An alternative is to increase the volume of material used at least in the mounting area, however also this would increase cost and weight.

Document US2013/026783 discloses an underbody panel, in particular a fender protector, showing raised elements integral to the fender protector displaced near the through-holes, to receive J-bolts and J-nuts.

It is therefore an object of the invention to overcome the problems of the state of the art as described, in particular to improve the strength of the mounting area and or to provide an alternative solution.

### Summary of invention

These objects are achieved by a moulded underbody panel with a mounting point as claimed.

In particular with a moulded underbody panel for shielding the underside of a motor vehicle, comprising a consolidated fibrous layer comprising at least one mounting point for mounting the moulded underbody panel to the vehicle by means for mounting, with the means for mounting comprising at least a rod shape element and a fixing element, whereby the mounting point consists at least of a through-hole extending through the moulded underbody panel for hosting the rod shape element, and a contact area on the moulded underbody panel surface, provided around the through-hole, for contacting and supporting the fixing element in the mounting position, and whereby the mounting point further comprises a blocking element which is formed integrally with the moulded underbody panel, whereby the blocking element is raised above at least the plane of the contact area and formed around the through-hole and whereby the distance between the foot of the blocking element facing the through hole and the centre of through-hole is 5 to 20 mm.

Surprisingly raising a portion of the material of the panel above the plane of the contact area, just high enough to block the fixing element prevents the rod shape element from touching the panel material and creating a too high local force and thereby enforcing the mounting points.

Preferably the height of the blocking element is at least as height as the fixing element, if the blocking element is too low the fixing element will slip over it and the rod shape element will be able to move against the wall of the through hole again comparable to the state of the art.

The blocking element is formed as a ridge and aligned around the border of the contacting area.

The raised portion can be in the form of a ridge around the contact area for the fixing element, preferably at least 2 mm and not higher than 6 mm raised above the plane of the contact area. The raised portion has the sole function of preventing the fixing element from moving so much that the rod shape element can ride into the side of the panel. A mere touching of the rod shape element is not enough to cause damage to the panel.

Preferably the width of the foot of the blocking element, defined as the width in the plane of the contact area between both sides of the ridge, is between 5 and 20 mm.

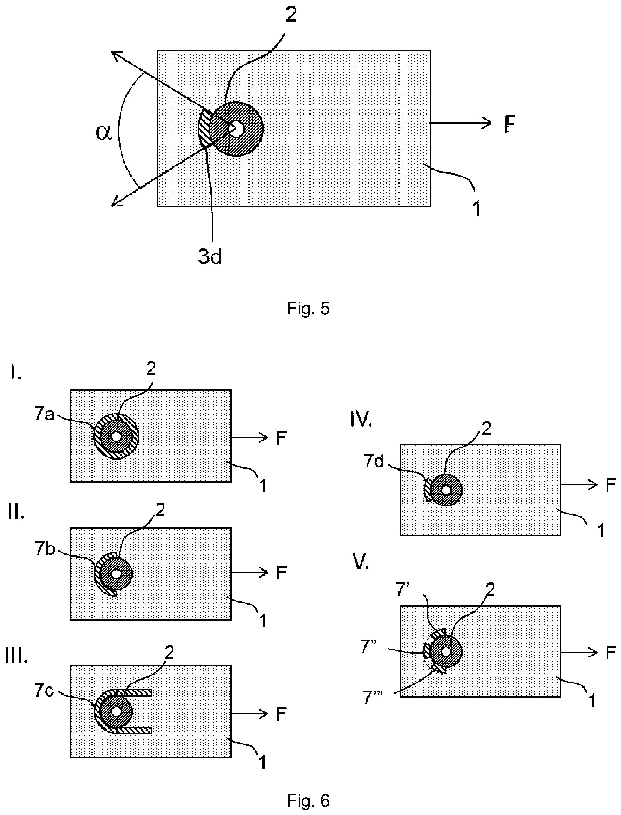

Preferably the blocking element in the form of a ridge segment has an apex angle α between 30° and 360°, wherein 360° corresponds to a full circular ring shaped raised area. The definition of the angle α is given by two imaginary lines through the centre of the through-hole and following the ends of the blocking element (figure 5). In case the blocking element is not a full circle the ends of at least one of end of the blocking element might be extended.

Preferably the ridge or blocking element is configured like a n-shaped wall. This can be done during the moulding process of the underbody panel. The ridge might be filled or hollow underneath. Preferably it is formed during the moulding process to form a hollow ridge, whereby the material is compressed in the ridge area to form the blocking element.

The at least one mounting point is situated along the outer rim of the panel, preferably at the rim of the front of the panel.

Surprisingly the use of such a blocking element or ridge around at least a part of the through hole increased the pull out strength of the means for mounting.

The fibrous panel comprises of at least fibers and a binder, whereby the fibers are either staple fibers or endless filaments.

Preferably the fibers are thermoplastic, preferably at least one of a polymer or copolymer of polyester, preferably polyethylene terephthalate or polybutylene terephthalate, or of polyamide, preferably polyamide 6 or polyamide 66 or of a polyolefin, preferably polypropylene or polyethylene.

Preferably the binder is either thermoset, preferably epoxy or phenolic, or thermoplastic, preferably a copolymer of polyester, preferably co-polyethylene terephthalate or co-polybutylene terephthalate, or a polyamide, preferably polyamide 6 or polyamide 66, or a polyolefin, preferably polypropylene or polyethylene.

Preferably the fibers and binder are combined in bicomponent fibers, preferably in the form of endless filaments with a core formed of polyethylene terephthalate and the sheath form of a copolymer of polyethylene terephthalate. Also a mixture of bicomponent fibers and mono component fibers might be used.

The fibers might also comprise mineral fibers, like glass fibers, basalt fibers or carbon fibers.

Also a mixture of the thermoplastic fibers as disclosed together with mineral fibers as disclosed is possible.

Preferably the fibrous layer is made at least partly of endless filaments to further strengthen the pull out force needed to pull off the part in the mounted state. Hence pulling the mounting means, in particular the fixing element through the hole.

Further embodiments of the moulded underbody panel according to the invention may be derived from the description also by combining the different embodiments to the invention and may be also derived from the description of the embodiments shown in the figures and the figures.

### Description of embodiments

Figure 1 shows schematic the underside of a vehicle.
Figure 2 shows examples of underbody panels.
Figure 3A and B shows schematically the mounting of an underbody panel to a vehicle chassis according to the prior art.
Figure 4A and B show schematically the mounting of an underbody panel to a vehicle chassis according to the invention.
Figure 5 shows defines the apex angle
Figure 6I to V show examples of the blocking elements according to the invention

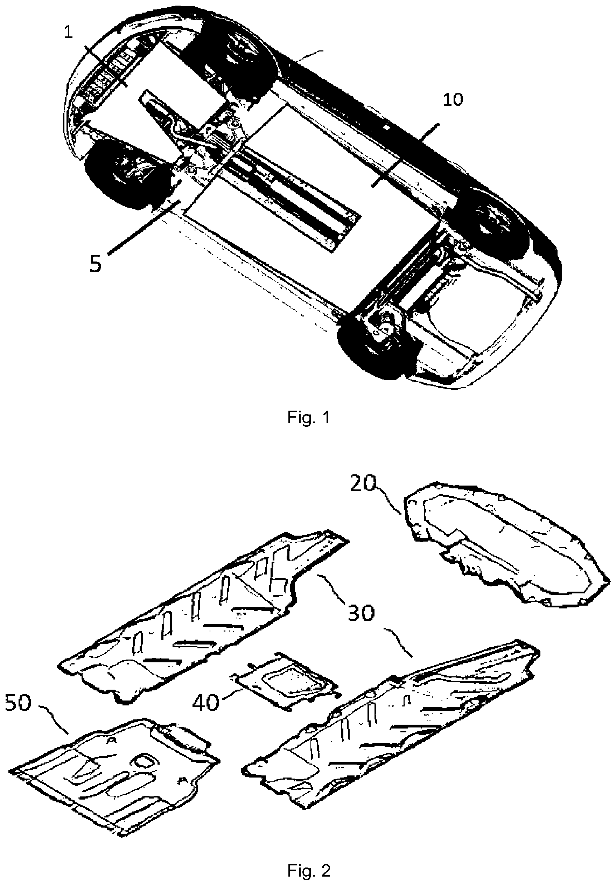

Figure 1 shows the underside of a vehicle with examples of underbody panels 1, 10 mounted to the chassis 5 of the vehicle, for instance to the cross beams of the steel carrying body of a vehicle. The panel 1 in front, also known as under engine panel is the most exposed to the forces during driving or for instance water wading.

Figure 2 shows additional underbody panels and a layout for such panelling, with the front or under engine panel 20, the main underbody panel 30, in this case divided in 2 parts, a centre panel 40 and the back panel 50, situated under the boot or trunk of the vehicle.

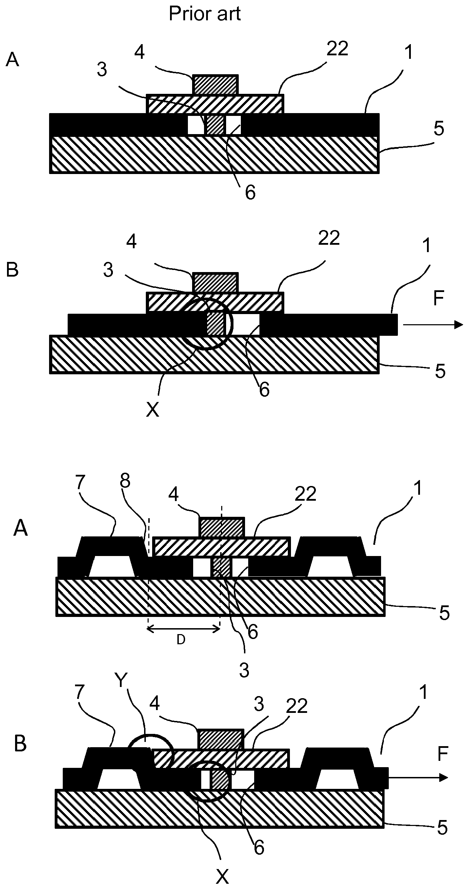

Figure 3A and B show an example of a fastening of the moulded underbody panel or panel 1 to the chassis of a vehicle 5. The moulded underbody panel has a through-hole 6 for inserting a rod shape element 3. An underbody panel normally contains at least one through-hole 3 for each mounting point. This through-hole is either punched through the material after the moulding of the part or integrated in the moulding tool as material free areas.

The mounting is achieved by inserting a rod shape element through the through-hole. The rod shaped element 3 might be permanently fixed to the vehicle chassis 5. The part will then be mounted by placing the through-hole over the rod shaped element and fixing it with at least a fixing element 4 which is able to clamp the material of the underbody panel in its place preventing or at least hindering any in plane or out of plane movement of the part, for instance a screw or clipping device, bolt and nut, or a punch clip system. A possible counter element when needed, for instance a nut may be integrated in the mounting area of the vehicle chassis or body. The rod shape element and the fixing elements together clip system. A possible counter element when needed, for instance a nut may be integrated in the mounting area of the vehicle chassis or body. The rod shape element and the fixing elements together form the means for mounting.

Generally for the mounting of these panels following types of fixing or means for mounting might be used: punch or screw clips, or screws in combination with a nut or a clip; however other more elaborate solutions are possible as well. In particular the use of washers 22 are favourable to increase the clamped area and thereby the friction force of the panel.

The panel is directly after mounting, fixed on the vehicle such that the panel cannot move particularly not in in-plane direction, however after a certain time of use the material might slightly loose its thickness and/ or rigidity and the original friction force between the fastener means and the moulded underbody panel may decrease such that the panel is able to move in-plane. This situation is shown in figure 3B. A force F, for instance induced during driving at speed or driving through water, pushes the underbody panel able to move against the rod shape element shown in the circled area A in figure 3B. As the rod shape element is permanently fixed and not able to move, the force is transferred into the material causing a local stress. The rod shape element will ride into the material. This might eventually lead to a breaking or tearing of the material at this point, causing the mounting point and or the part to fail during use. Such defaults are more often in the mounting points that are arranged on the rim area of the panel, particularly on the area situated at the front of the panel, pointing to the front of the vehicle.

Figure 4A and B show an underbody panel with a mounting area according to the invention. By introducing a blocking element 7 at least partly along the contact area and in a distance D of between 5 and 20mm measured from the centre of the through hole, the panel will move until stopped by the fixing element or optionally the washer element, hitting the side of the blocking element, shown in the circled area Y. As the blocking element is touched by a large area of the fixing or washer element the force is divided over a larger area. As the blocking element has a larger area X, however even if it would be able to merely touch the rim the blocking element would still be able to redistribute the force and prevent the failure of the mounting point.

Figure 5 shows schematically simplified the underbody panel 1 with a through hole and a contact area 2 for the fixing element of the washer element (not shown). In this example there is only a partial blocking element 3d placed along the contact area 2. The length the blocking element extends along the border of the contact area can be defined by the apex angle, whereby the angle α is given by two imaginary line through the centre of the through-hole and following the ends of the blocking as shown in the drawing.

Figure 6I to V show schematically simplified the underbody panel 1 with a through hole and a contact area 2 for the fixing element of the washer element (not shown) as already shown in figure 5. Figure 6I to V show different possible solutions for the blocking element 7a-d and 7'-7"'. With F the force direction is given that is expected to work on the part mounted on a vehicle in use, for instance during driving at speed and or through water.

In figure 6I. a circular ring-shaped blocking section 7a comprises a single circular ring-shaped blocking element, being an embossing integrally formed with moulded underbody panel 1 and aligned to extend along the border of contact area of the contact area 2. The blocking element is a single element forming substantially the whole blocking section. Having an apex of 360° according to the definition given in figure 5.

In figure 6 II. a semi-circular ring-shaped blocking section 7b, respectively a circular ring-segment with apex angle α =180° is shown. Blocking section 7b comprises a single semi-circular ring-shaped blocking element 7b, being an embossing integrally formed with the moulded underbody panel 1 and aligned to extend along a border segment of contact area 2.

Figure 6III. shows the moulded underbody panel 1 with an U-shaped blocking section 7c comprises a single U-shaped blocking element 7c, being an embossing integrally formed with moulded underbody panel 1 and aligned to extend along a border segment of contact area 2. The straight flanks of the U-shaped embossing 7c act as anchors, which are pulled under the load F and which additionally enhance the mechanical resistance of the moulded underbody panel 1.

Figure 6 IV. shows the moulded underbody panel 1, a circular ring-segment 7d with apex angle α=60°. Blocking section 3d comprises a single circular ring-segment 7d with apex angle α=60° forming the blocking element 7d, being an embossing integrally formed with moulded underbody panel 1 and aligned to extend along a border segment of the contact area 2.

Figure 6V. shows the moulded underbody panel 1. A blocking section 7 formed as circular ring-segment with apex angle α=180° comprises three circular ring-segments 7', 7" and 7"', being separated by a void space respectively between them, with apex angles of the ring-segments of about α=40°, each ring-segment forming a blocking element being an embossing integrally formed with moulded underbody panel 1 and following the contact area 2.

Although the examples in figure 5 and 6 are showing a circular contact area the contact area might also be elliptical or irregular in shape, depending on the means for mounting in particular the fixing element and or washer element and on the available space around the mounting point.

The examples of mounting systems are not exhaustive; in particular the different elements of the systems shown can be mixed among the systems as known by the skilled person.

## Claims

1. Vehicle with a moulded underbody panel (1) for shielding the underside of a motor vehicle, comprising a consolidated fibrous layer comprising at least one mounting point for mounting the moulded underbody panel to the vehicle by means for mounting, and further comprising means for mounting comprising at least a rod shape element (3), and a fixing element (4), whereby the mounting point consists at least of a through-hole extending through the moulded underbody panel for hosting the rod shape element, and a contact area on the moulded underbody panel surface, provided around the through-hole, for contacting and supporting the fixing element in the mounting position, wherein the mounting point further comprises a blocking element (7) which is formed integrally with the moulded underbody panel, whereby the blocking element is raised above at least the plane of the contact area and formed around the through-hole such that the fixing element is prevented from moving so much that the rod shape element can ride into the side of the panel and whereby the distance between the foot of the blocking element facing the through hole and the centre of through-hole is 5 to 20 mm.

2. Vehicle with a moulded underbody panel according to claim 1, wherein the consolidated fibrous layer consists of fibres and a thermoplastic or thermoset binder.

3. Vehicle with a moulded underbody panel according to claim 2, wherein the fibres are at least one of mineral fibers, preferably glass fibers, polyester fibers, or recycling fibers.

4. Vehicle with a moulded underbody panel according to claim 2, wherein the thermoset binder is one of epoxy resin or phenolic resin.

5. Vehicle with a moulded underbody panel according to claim 2, wherein the thermoplastic binder is one of polyamide, polypropylene or a copolymer of polyester or a bicomponent fiber with one component working as a binder.

6. Vehicle with a moulded underbody panel according to one of the preceding claims, whereby the blocking element is at least 2 mm and not higher than 6mm raised above the plane of the contact area.

7. Vehicle with a moulded underbody panel according to one of the preceding claims, whereby the blocking element is formed as a ridge and aligned around the border of the contacting area.

8. Vehicle with a moulded underbody panel according to claim 7, whereby the ridge segment has an apex angle α between 30° and 360°, wherein 360° corresponds to a full circular ring shaped raised area.

9. Vehicle with a moulded underbody panel according to one of the preceding claims wherein the blocking element is configured in a U shape.

10. Vehicle with a moulded underbody panel according to one of the preceding claims whereby the at least one mounting point is situated along the outer rim of the panel, preferably at the rim of the front of the panel.

11. Vehicle with a moulded underbody panel according to one of the preceding claims whereby the width of the foot of the blocking element is between 5 and 20 mm.

## Patentansprüche

1. Fahrzeug mit einer geformten Unterbodenverkleidung (1) zur Abschirmung der Unterseite eines Kraftfahrzeugs, umfassend eine verfestigte Faserschicht, die mindestens einen Montagepunkt zur Montage der geformten Unterbodenverkleidung an dem Fahrzeug durch Befestigungsmittel umfasst, und weiter umfassend Befestigungsmittel, die mindestens ein stabförmiges Element (3) und ein Befestigungselement (4) umfassen, wobei der Montagepunkt mindestens aus einem Durchgangsloch besteht, das sich durch die geformte Unterbodenverkleidung erstreckt, um das stabförmige Element aufzunehmen, und aus einem Kontaktbereich auf der Oberfläche der geformten Unterbodenverkleidung, der um das Durchgangsloch herum bereitgestellt ist, um das Befestigungselement in der Montageposition zu kontaktieren und zu stützen, wobei der Montagepunkt weiter ein Sperrelement (7) umfasst, das integral mit der geformten Unterbodenverkleidung ausgebildet ist, wobei das Sperrelement zumindest über die Ebene der Kontaktfläche angehoben und um das Durchgangsloch herum so geformt ist, dass das Befestigungselement daran gehindert wird, sich so weit zu bewegen, dass das stabförmige Element in die Seite des Paneels hineinfahren kann, und wobei der Abstand zwischen dem Fuß des Sperrelements, der dem Durchgangsloch gegenüberliegt, und der Mitte des Durchgangslochs 5 bis 20 mm beträgt.

2. Fahrzeug mit einer geformten Unterbodenverkleidung nach Anspruch 1, wobei die verfestigte Faserschicht aus Fasern und einem thermoplastischen oder duroplastischen Bindemittel besteht.

3. Fahrzeug mit einer geformten Unterbodenverkleidung nach Anspruch 2, wobei die Fasern mindestens eine von Mineralfasern, bevorzugt Glasfasern, Polyesterfasern oder Recyclingfasern sind.

4. Fahrzeug mit einer geformten Unterbodenverkleidung nach Anspruch 2, wobei das duroplastische Bindemittel ein Epoxidharz oder ein Phenolharz ist.

5. Fahrzeug mit einer geformten Unterbodenverkleidung nach Anspruch 2, wobei das thermoplastische Bindemittel eines von Polyamid, Polypropylen oder einem Copolymer von Polyester oder einer Bikomponentenfaser ist, wobei eine Komponente als Bindemittel wirkt.

6. Fahrzeug mit einer geformten Unterbodenverkleidung nach einem der vorstehenden Ansprüche, wobei das Sperrelement mindestens 2 mm und höchstens 6 mm über die Ebene der Kontaktfläche angehoben ist.

7. Fahrzeug mit einer geformten Unterbodenverkleidung nach einem der vorhergehenden Ansprüche, wobei das Sperrelement als Steg ausgebildet ist und um den Rand der Kontaktfläche ausgerichtet ist.

8. Fahrzeug mit einer geformten Unterbodenverkleidung nach Anspruch 7, wobei das Stegsegment einen Scheitelwinkel α zwischen 30° und 360° aufweist, wobei 360° einem vollkreisförmigen ringförmigen angehobenen Bereich entspricht.

9. Fahrzeug mit einer geformten Unterbodenverkleidung nach einem der vorstehenden Ansprüche, wobei das Sperrelement U-förmig ausgebildet ist.

10. Fahrzeug mit einer geformten Unterbodenverkleidung nach einem der vorstehenden Ansprüche, wobei sich der mindestens eine Montagepunkt entlang des äußeren Randes der Verkleidung, bevorzugt am Rand der Vorderseite der Verkleidung, befindet.

11. Fahrzeug mit einer geformten Unterbodenverkleidung nach einem der vorstehenden Ansprüche, wobei die Breite des Fußes des Sperrelements zwischen 5 und 20 mm beträgt.

## Revendications

1. Véhicule avec un panneau de dessous de caisse moulé (1) pour protéger le côté inférieur d'un véhicule à moteur, comprenant une couche fibreuse consolidée comprenant au moins un point de montage pour monter le panneau de dessous de caisse moulé sur le véhicule par des moyens de montage, et comprenant en outre des moyens de montage comprenant au moins un élément en forme de tige (3), et un élément de fixation (4), selon lequel le point de montage se compose d'au moins un trou traversant s'étendant à travers le panneau de dessous de caisse moulé pour recevoir l'élément en forme de tige, et d'une zone de contact sur la surface de panneau de dessous de caisse moulé, disposée autour du trou traversant, pour venir en contact avec l'élément de fixation et pour maintenir celui-ci dans la position de montage, dans lequel
le point de montage comprend en outre un élément de blocage (7) qui est formé d'un seul tenant avec le panneau de dessous de caisse moulé, selon lequel l'élément de blocage est surélevé au-dessus au moins du plan de la zone de contact et formé autour du trou traversant de telle sorte que l'élément de fixation soit empêché de se déplacer pour autant que l'élément en forme de tige peut avancer dans le côté du panneau et selon lequel la distance entre le pied de l'élément de blocage faisant face au trou traversant et le centre du trou traversant est de 5 à 20 mm.

2. Véhicule avec un panneau de dessous de caisse moulé selon la revendication 1, dans lequel la couche fibreuse consolidée se compose de fibres et d'un liant thermoplastique ou thermodurci.

3. Véhicule avec un panneau de dessous de caisse moulé selon la revendication 2, dans lequel les fibres sont au moins l'une de fibres minérales, de préférence de fibres de verre, de fibres de polyester, ou de fibres de recyclage.

4. Véhicule avec un panneau de dessous de caisse moulé selon la revendication 2, dans lequel le liant thermodurci est l'une d'une résine époxy ou d'une résine phénolique.

5. Véhicule avec un panneau de dessous de caisse moulé selon la revendication 2, dans lequel le liant thermodurci est l'un d'un polyamide, d'un polypropylène ou d'un copolymère de polyester ou d'une fibre à deux composants avec un composant agissant comme un liant.

6. Véhicule avec un panneau de dessous de caisse moulé selon l'une quelconque des revendications précédentes, selon lequel l'élément de blocage fait au moins 2 mm et n'est pas haut que 6 mmm surélevé au-dessus du plan de la zone de contact.

7. Véhicule avec un panneau de dessous de caisse moulé selon l'une quelconque des revendications précédentes, selon lequel l'élément de blocage est formé sous la forme d'une crête et aligné autour du bord de la zone de contact.

8. Véhicule avec un panneau de dessous de caisse moulé selon la revendication 7, selon lequel le segment de crête présente un angle de sommet α entre 30° et 360°, dans lequel 360° correspond à une zone surélevée en forme de bague complètement circulaire.

9. Véhicule avec un panneau de dessous de caisse moulé selon l'une quelconque des revendications précédentes, dans lequel l'élément de blocage est configuré sous une forme de U.

10. Véhicule avec un panneau de dessous de caisse moulé selon l'une quelconque des revendications précédentes, selon lequel le au moins un point de montage est situé le long du rebord externe du panneau, de préférence au niveau du rebord de la partie avant du panneau.

11. Véhicule avec un panneau de dessous de caisse moulé selon l'une quelconque des revendications précédentes, selon lequel la largeur du pied de l'élément de blocage est entre 5 et 20 mm.
